# EUROPEAN PATENT APPLICATION

(11) **EP 2 145 983 A1**
(43) Date of publication of application: **20.01.2010**
(21) Application number: 09164870.9
(22) Date of filing: 08.07.2009
(51) Int. Cl.: C25B 1/08, C25B 9/20, C25B 15/02, B01J 35/00, C25B 1/00

(54) **Apparatus for producing a mixture of hydrogen and oxygen**

(30) Priority: 14.07.2008 KR 20080068165
(71) Applicant: Hwang, Boo-Sung, Kyung-ki do (KR)
(72) Inventor: Hwang, Boo-Sung, Kyung-ki do (KR)
(74) Representative: Lermer, Christoph

(57) **Abstract**

The apparatus for producing a mixture of hydrogen and oxygen is disclosed, which comprises an outer plate member unit 10 in which a plurality of first plate members 11 having a main hole 11 a in its center and a circular gasket 11a 13 having a certain thickness and surrounding the main hole 11a are alternately installed; front and rear covers 30 and 40 which are installed in the front and rear sides of the outer plate member unit 10 and fixes the inner plate member unit 20 spaced apart from an inner side of the main hole 11a and is insulated from the inner plate member unit 20; a water supply hole 50 which is formed in the front cover 30 for supplying water to the electrolyte space 10a; and a gas discharge hole 50 which is formed in the front cover 30 for discharging a mixture of hydrogen and oxygen, wherein the first plate members 11 form a body, and the main holes 11a of the first plate member 11 form a cylinder, and the inner side of the circular gaskets 13 and the main holes 11a form an electrolyte space 10a in which electrolysis occurs, and in the electrolysis space 10a, the outer sides of the circular gaskets 13 play a function of the cooling fins.

## Description

### TECHNICAL FIELD

The present invention relates to an apparatus for more efficiently producing a mixture of hydrogen and oxygen using water.

### BACKGROUND ART

The apparatus for generating a harmful mixture of hydrogen and oxygen is directed to generating a mixture of hydrogen and oxygen which are obtained based on an electrolysis and does not produce pollution and are not harmful in such a manner that water with a small amount of electrolyte to an electrolytic cell with positive and negative electrodes. At this time, the hydrogen and oxygen are produced at a mole ratio of 2:1, the hydrogen produced in a bubble shape at the surface of the negative electrode, the oxygen produced in a bubble shape at the surface of the positive electrode. The thusly produced hydrogen and oxygen are mixed in a mixed gas form, which can burn. During the combustion, since the mixture of hydrogen and oxygen does not produce pollutants, it is very friendly and can be recognized as a new energy source.

However, since the amount of hydrogen and oxygen as compared to the electric power used for generating the same and applied to the positive and negative electrodes, it is disadvantageously needed to add a certain auxiliary gas such as propane gas to the mixture of hydrogen and oxygen, which leads to a bad production efficiency.

### DISCLOSURE OF THE INVENTION

Accordingly, it is an object of the present invention to provide an apparatus for producing a mixture of hydrogen and oxygen which can promote an economic production by increasing the amount of a mixture of hydrogen and oxygen as compared to electric energy used.

To achieve the above objects, there is provided an apparatus for producing a mixture of hydrogen and oxygen, comprising an outer plate member unit 10 in which a plurality of first plate members 11 having a main hole 11a in its center and a circular gasket 11a 13 having a certain thickness and surrounding the main hole 11a are alternately installed; front and rear covers 30 and 40 which are installed in the front and rear sides of the outer plate member unit 10 and fixes the inner plate member unit 20 spaced apart from an inner side of the main hole 11a and is insulated from the inner plate member unit 20; a water supply hole 50 which is formed in the front cover 30 for supplying water to the electrolyte space 10a; and a gas discharge hole 50 which is formed in the front cover 30 for discharging a mixture of hydrogen and oxygen, wherein the first plate members 11 form a body, and the main holes 11a of the first plate member 11 form a cylinder, and the inner side of the circular gaskets 13 and the main holes 11a form an electrolyte space 10a in which electrolysis occurs, and in the electrolysis space 10a, the outer sides of the circular gaskets 13 play a function of the cooling fins.

The outer plate member unit 10 includes an engaging rod 15 which passes through the first plate member 11 and the first and second engaging holes 11 band 13b of the circular gasket 13 which are alternately arranged with one another, and the both ends of the engaging rod 15 pass through the engaging through holes 31 and 41 of the front and rear covers 30 and 40.

The surfaces of the first and second plate members 11 and 21 are nano-polished so electrolysis can efficiently occur, and the produced hydrogen and oxygen bubbles can be easily detached.

The inner plate member unit 20 includes a support rod 25 which passes through the through holes formed in the second plate member 21 and the spacing member 22 which are alternately formed, and the support rod 25 passes through the insulation brackets 35 and 45.

There are further provided a casing bracket 70 which surrounds the outer plate member unit 10, and a cooling fan 80 installed in the casing bracket 70 for supplying cooling air to the outer plate member unit 10.

### EFFECTS

In the apparatus for generating a mixture of hydrogen and oxygen, it is possible to more efficiently produce a mixture of hydrogen and oxygen without adding an auxiliary gas such as propane by increasing the amount of hydrogen and oxygen as compared to electric energy used, which leads to more economical production.

Since the hydrogen and oxygen produced in bubble shapes from the electrodes can be easily separated, the effective area of the electrodes in which electrolysis occurs is increased, by means of which an electrolyte efficiency can be enhanced.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating an apparatus for producing a mixture of hydrogen and oxygen according to the present invention;
Figure 2 is a disassembled perspective view of Figure 1;
Figure 3 is a cross sectional view taken along the line III-III' of Figure 1;
Figure 4 is a view illustrating first and second plate members of Figure 1;
Figure 5 is a view for describing a state that photo catalyst is formed on the first and second plate members of Figure 4; and
Figure 6 is a view for describing a casing bracket which surrounds the outer plate member unit of Figure 1 and a cooling fan which supplies cooled air to the outer plate member unit according to the present invention.

### MODES FOR CARRYING OUT THE INVENTION

The apparatus for producing a mixture of hydrogen and oxygen according to the present invention will be described with reference to the accompanying drawings.

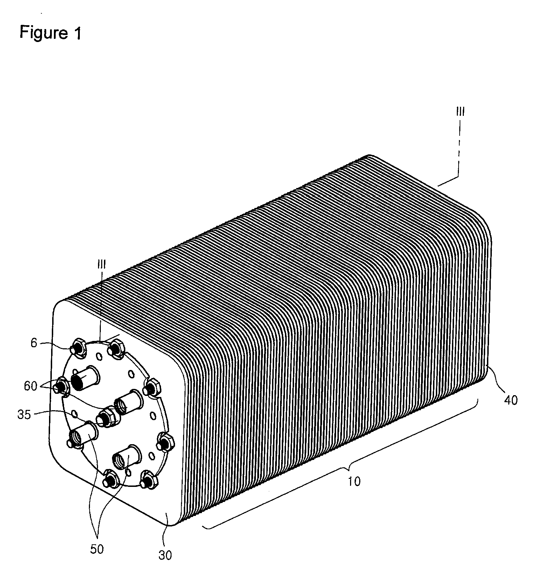

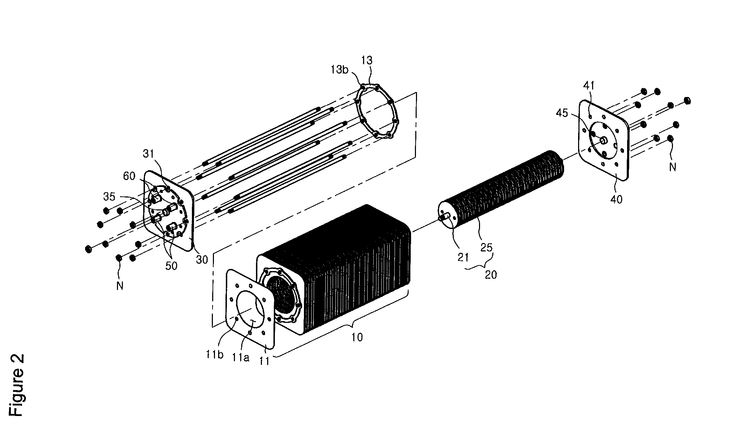

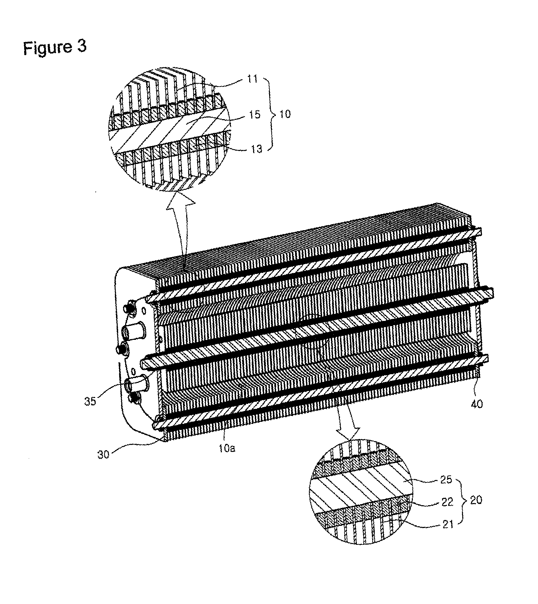

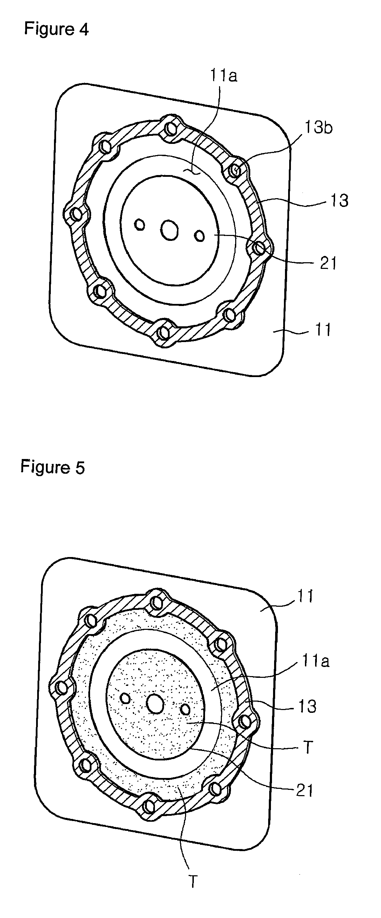

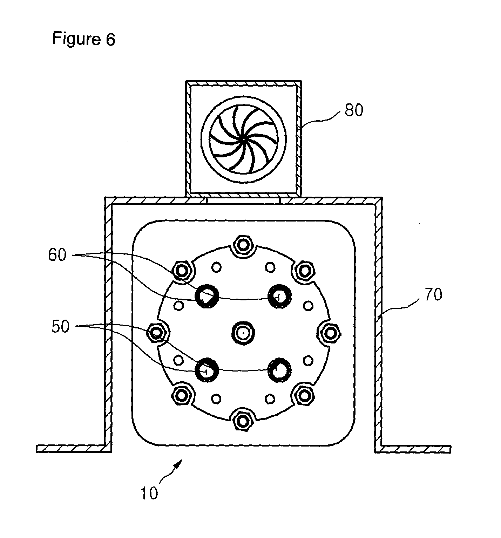

Figure 1 is a perspective view illustrating an apparatus for producing a mixture of hydrogen and oxygen according to the present invention, Figure 2 is a disassembled perspective view of Figure 1, Figure 3 is a cross sectional view taken along the line III-III' of Figure 1, Figure 4 is a view illustrating first and second plate members of Figure 1, Figure 5 is a view for describing a state that photo catalyst is formed on the first and second plate members of Figure 4, and Figure 6 is a view for describing a casing bracket which surrounds the outer plate member unit of Figure 1 and a cooling fan which supplies cooled air to the outer plate member unit according to the present invention.

The apparatus for producing a mixture of hydrogen and oxygen comprises an outer plate member unit 10 in which a plurality of first plate members 11 having a main hole 11a in its center and a circular gasket 11a 13 having a certain thickness and surrounding the main hole 11a are alternately installed; front and rear covers 30 and 40 which are installed in the front and rear sides of the outer plate member unit 10 and fixes the inner plate member unit 20 spaced apart from an inner side of the main hole 11a and is insulated from the inner plate member unit 20; a water supply hole 50 which is formed in the front cover 30 for supplying water to the electrolyte space 10a; and a gas discharge hole 50 which is formed in the front cover 30 for discharging a mixture of hydrogen and oxygen, wherein the first plate members 11 form a body, and the main holes 11a of the first plate member 11 form a cylinder, and the inner side of the circular gaskets 13 and the main holes 11a form an electrolyte space 10a in which electrolysis occurs, and in the electrolysis space 10a, the outer sides of the circular gaskets 13 play a function of the cooling fins.

The outer plate member unit 10 includes an engaging rod 15 which passes through the first plate member 11 and the first and second engaging holes 11 b and 13b of the circular gasket 13 which are alternately arranged with one another, and the both ends of the engaging rod 15 pass through the engaging through holes 31 and 41 of the front and rear covers 30 and 40.

At this time, the first plate members 11 form a body of the external plate member unit 10 of the present invention. The main holes 11a of the first plate member 11 form a cylinder. The inner sides of the circular gaskets 13 and the main holes 11a form an electrolyte space 10a in which electrolysis occurs. In the first plate member 11, an outer configuration of the circular gasket 13 plays a role of the cooling fins.

The first plate member 11 generally is formed in a rectangular shape with a circular main hole 11a being formed in its center. The surfaces of the first plate member 11 is nano polished, by means of which an electrolysis can easily occur, and the bubbles of hydrogen and oxygen can be easily detached. The first plate member 11 is preferably made of a metallic material such as stainless steel, allot steel etc.

Here, the nano polishing process is to nano-polish the surface of the first plate member 11. So, the friction force of the surface of the first plate member 11 can be minimized through the nano polishing process, so the bubbles of hydrogen and oxygen can be easily detached. In particular, when the size of the material becomes small in a bulk state, a mechanical property, a thermal property, an electrical property, a magnetic property, an electrical property and an optical property greatly change. The electrolysis of water can be made more active by changing the physical properties based on the nano polishing work on the surface of the first plate member 11.

Tourmaline might be attached to the surface of the first plate member 11 as a photocatalyst. The tourmaline photocatalyst can be made by grinding the tourmaline from a few micro sizes to a few nano meter sizes and is plastic-processed at a temperature of 1300°C and is attached to the first plate member 11 using a certain adhesive. The tourmaline is a mineral having a hexagonal structure having a crystal structure similar to a crystal and can be used to produce electricity by a friction method and a lot of anion, while promoting electrolysis by means of which lots of hydrogen and oxygen can be produced. Since the tourmaline is ground into powder form and plastic-formed, the contacting area with water can be increased along with more micro pores, which are beneficial to photocatalyst. So, it is possible to promote electrolysis of water by attaching the tourmaline photocatalyst to the first plate member 11.

A plurality of first engaging holes 11 b are formed around the main hole 11a of the first plate member 11, and a second engaging hole 13b corresponding to the first engaging hole 11 b is formed in the circular gasket 13. The circular gasket 13 is made of a flexible material, which spaces the first plate member 11 and another first plate member. The engaging rod 15 passes through the first plate member 11 and the first and second engaging holes 11 b and 13b of the circular gasket 13 and passes through the front and rear covers 30 and 40 and are engaged using a nut N.

The inner plate member unit 20 is implemented as a plurality of second plate members 21 are spaced apart and engaged and is disposed in the interior of the electrolyte space 10a, so electrolysis can occur properly. The inner plate material unit 20 comprises a circular second plate material 21 smaller than the first main hole 11a, a spacing member 22 having a diameter smaller than the second plate member 21 for spacing the second plate member 21 and another second plate member, and a support rod 25 which passes through the through holes formed in the alternately arranged second plate member 21 and spacing member 22. At this time, both ends of the support rod 25 pass through the insulation brackets 35 and 45 installed in the centers of the front and rear covers 30 and 40 and are engaged with the nut N.

The surface of the second plate member 21 is nano-polished in the method similar with the first plate member 11, so that electrolysis can easily occur, and the bubbles of hydrogen and oxygen generated can be easily detached, and tourmaline photo catalyst can be attached. The second plate member 21 is made of a metallic material such as stainless steel or alloy steel in the method similar with the first plate member 11.

In the first plate member 11, electrolysis can occur between an inner side of the circular gasket 13 and the second plate member 21. It is possible to change the amount of produced hydrogen or oxygen by changing the area of the inner portion of the circular gasket 13 and the area of the second plate member 21. For example, it is possible to increase the production of hydrogen gas as compared to oxygen gas by increasing the area of the second plate member 21 as compared to the area of the inner portions of the circular gasket 13, and by applying the positive power to the outer plate member unit 10 and the negative power to the inner plate member unit 20. On the contrary, it is possible to increase the amount of produced oxygen gas as compared to the hydrogen gas by applying the positive power to the outer plate member unit 100 and the negative power to the outer plate member unit 100.

The front and rear covers 30 and 40 are installed at both ends of the outer plate member unit 10, and the engaging rod 15 of the outer plate member unit 10 passes through the engaging through holes 31 and 41. Insulation brackets 35 and 45, which support the support rod 25 of the inner plate member unit 20, are installed in the center of the same.

The front and rear covers 30 and 40 are given substantial durability for stably supporting the engaging rod 15 of the outer plate member unit 10 and the support rod 25 of the inner plate member unit 20 and preferably are made of thicker metallic materials as compared to the first and second plate members 11 and 21.

The water supply holes 50a and 50b are formed in one pair and are installed in the front lower side of the front cover 30 for supplying water to the electrolyte space 10a. The gas discharge hole 60 is installed in a front upper side of the front cover 30 for discharging a mixture of hydrogen and oxygen which is produced in the electrolyte space 10a. At this time, the water supply holes 50a and 50b are disposed in the lower side of the gas discharge hole 60.

The cooling pan 80 supplies the cooled air to the outer plate member unit 10. A casing bracket 70 is installed around the outer plate member unit 10. The cooling fan 80 is installed in the casing racket 70 for supplying cooled air to the outer plate member unit 10. So, one side of the casing bracket 70 is opened, and the cooled air is discharged to the outside through the outer plate member unit 10.

With the helps of the above structure, water is supplied into the electrolyte space 10a through one pair of the water supply holes 50a and 50b, and the positive power is applied to the outer plate member unit 10, and the negative power is applied to the inner plate member unit 20. Hydrogen and oxygen bubbles are produced between the first and second plate members 11 and 21 in the interior of the electrolyte space 10a. The hydrogen and oxygen bubbles are mixed and discharged to the outside through the gas discharge hole 60.

While electrolysis occurs, a lot of heat occurs in the interior of the electrolyte space 10a. The thusly generated heat is cooled by the cooling air which is supplied to the outer plate member unit 10 with the helps of the cooling fan 80.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An apparatus for producing a mixture of hydrogen and oxygen, comprising:
an outer plate member unit 10 in which a plurality of first plate members 11 having a main hole 11a in its center and a circular gasket 11a 13 having a certain thickness and surrounding the main hole 11a are alternately installed;
front and rear covers 30 and 40 which are installed in the front and rear sides of the outer plate member unit 10 and fixes the inner plate member unit 20 spaced apart from an inner side of the main hole 11a and is insulated from the inner plate member unit 20;
a water supply hole 50 which is formed in the front cover 30 for supplying water to the electrolyte space 10a; and
a gas discharge hole 50 which is formed in the front cover 30 for discharging a mixture of hydrogen and oxygen,
wherein said first plate members 11 form a body, and the main holes 11a of the first plate member 11 form a cylinder, and the inner side of the circular gaskets 13 and the main holes 11a form an electrolyte space 10a in which electrolysis occurs, and in the electrolysis space 10a, the outer sides of the circular gaskets 13 play a function of the cooling fins.

2. The apparatus of claim 1, wherein said outer plate member unit 10 includes an engaging rod 15 which passes through the first plate member 11 and the first and second engaging holes 11 band 13b of the circular gasket 13 which are alternately arranged with one another, and the both ends of the engaging rod 15 pass through the engaging through holes 31 and 41 of the front and rear covers 30 and 40.

3. The apparatus of claim 1, wherein the surfaces of the first and second plate members 11 and 21 are nano-polished so electrolysis can efficiently occur, and the produced hydrogen and oxygen bubbles can be easily detached.

4. The apparatus of claim 1, wherein tourmaline photo catalyst are attached to the surfaces of the first and second plate members 11 and 21.

5. The apparatus of claim 1, wherein said inner plate member unit 20 includes a support rod 25 which passes through the through holes formed in the second plate member 21 and the spacing member 22 which are alternately formed, and said support rod 25 passes through the insulation brackets 35 and 45.

6. The apparatus of claim 1, further comprising a casing bracket 70 which surrounds the outer plate member unit 10, and a cooling fan 80 installed in the casing bracket 70 for supplying cooling air to the outer plate member unit 10.
